(19) Europäisches Patentamt
European Patent Office
Office européen des brevets

(11) EP 3 636 721 A1

(12) **EUROPEAN PATENT APPLICATION**

(43) Date of publication:
15.04.2020 Bulletin 2020/16

(51) Int Cl.:
C09J 5/06 (2006.01)          C09J 7/38 (2018.01)
B64D 15/00 (2006.01)

(21) Application number: 19202775.3

(22) Date of filing: 11.10.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 11.10.2018  US 201816157769

(71) Applicant: Goodrich Corporation
Charlotte, NC 28217-4578 (US)

(72) Inventors:
• WALSH, Peter J.
Wethersfield, CT Connecticut 06109 (US)
• TAYLOR, Andrew
Hudson, OH Ohio 44236 (US)
• HU, Jin
Hudson, OH Ohio 44236 (US)

(74) Representative: Dehns
St. Bride's House
10 Salisbury Square
London EC4Y 8JD (GB)

(54) **THERMALLY SWITCHABLE HIGH SHEAR PRESSURE SENSITIVE ADHESIVE**

(57)    A device comprises an active element panel (14) and a pressure sensitive adhesive layer (16). The pressure sensitive adhesive layer is bonded to the active element panel and defines a bonding surface (22) that is bondable to an aircraft structure. The pressure sensitive adhesive layer comprises a mixture of a pressure sensitive adhesive and a solid solvent.

In a preferred embodiment, the solid solvent is selected from a group consisting of carboxylic acids and L-lactide.

Fig. 1

EP 3 636 721 A1

**Description**

BACKGROUND

The present disclosure relates generally to pressure sensitive adhesives (PSAs), and more particularly to PSAs used for bonding an active element panel to an aircraft structure.

PSAs are used to adhere a wide variety of aircraft components, including but not limited to deicers, anti-icers, and heated floor panels. PSAs used for deicing and anti-icing applications must have a high shear strength to maintain durability during actuation (i.e., inflation of a pneumatic deicer) and across a service temperature range of -40 °F to 160 °F (-40 °C to 71 °C). Current PSAs used to attach deicers to aircraft surfaces cannot be removed without the use of solvents, scrapers, and abrasives. A need exists for a PSA that can behave as a high shear PSA when in service and as removable PSA at the end of the lifetime of the component or if repositioning is needed during installation.

SUMMARY

In one aspect, a device comprises an active element panel and a pressure sensitive adhesive layer bonded to the active element panel and defining a bonding surface bondable to an aircraft structure. The pressure sensitive adhesive layer comprises a mixture of a pressure sensitive adhesive and a solid solvent.

In another aspect, a method for removing an active element panel on an aircraft structure includes applying heat to a pressure sensitive adhesive layer of the active element panel and separating the pressure sensitive adhesive layer from the aircraft structure. The pressure sensitive adhesive layer includes a mixture of a pressure sensitive adhesive and a solid solvent.

The present summary is provided only by way of example, and not limitation. Other aspects of the present disclosure will be appreciated in view of the entirety of the present disclosure, including the entire text, claims and accompanying figures.

BRIEF DESCRIPTION OF THE DRAWINGS

FIG. 1 depicts a device with an active element panel adhered to an aircraft structure.
FIG. 2 is a Chang plot of one embodiment of a thermally switchable high shear pressure sensitive adhesive according to the present disclosure.

While the above-identified figures set forth embodiments of the present invention, other embodiments are also contemplated, as noted in the discussion. In all cases, this disclosure presents the invention by way of representation and not limitation. It should be understood that numerous other modifications and embodiments can be devised by those skilled in the art, which fall within the scope and spirit of the principles of the invention. The figures may not be drawn to scale, and applications and embodiments of the present invention may include features, steps and/or components not specifically shown in the drawings.

DETAILED DESCRIPTION

A solid solvent can be incorporated into a high shear pressure sensitive adhesive (PSA) to produce a thermally switchable PSA, which exhibits properties of a high shear PSA below a melting temperature of the solid solvent and exhibits properties of a removable PSA above the melting temperature of the solid solvent. Heat can be applied to the thermally switchable PSA to allow for removal and repositioning during installation without destroying the PSA and without leaving a residue on an aircraft surface to which the PSA was bonded. As used herein, "pressure sensitive adhesive" refers to an adhesive that bonds to a surface upon application of pressure without the use of solvents to apply or activate the adhesive, and includes one or two-sided adhesive transfer tape. The term "thermally switchable" refers to the change in rheological behavior of the PSA upon application or removal of heat. Various examples of thermally switchable PSAs are provided herein. The use of thermally switchable PSAs can facilitate the installation and removal of various aircraft components, which are adhesively bonded to a substrate. The thermally switchable PSAs of the present disclosure are particularly suited to the installation of aircraft components requiring high shear strength across a wide range of service temperatures (e.g., -40 °F to 160 °F (-40 °C to 71 °C)), such as anti-icers and deicers used to inhibit atmospheric ice accumulation on aircraft structures. Examples of deicers suitable for use with the thermally switchable PSAs disclosed herein include, but are not limited to, elastomeric pneumatic deicers, elastomeric electrothermal deicers, and electromechanical deicers, as known in the art and described in U.S. Pat. Nos. 6,250,587 and 6,352,601. Those skilled in the art will also appreciate that the thermally switchable PSAs of the present disclosure can also replace conventional PSAs used in other applications that do not necessarily require high shear strength, but may benefit from switchable high shear strength and removable rheological behavior. Such applications include, but are not limited to, heated floor panels for aircraft cabin temperature control.

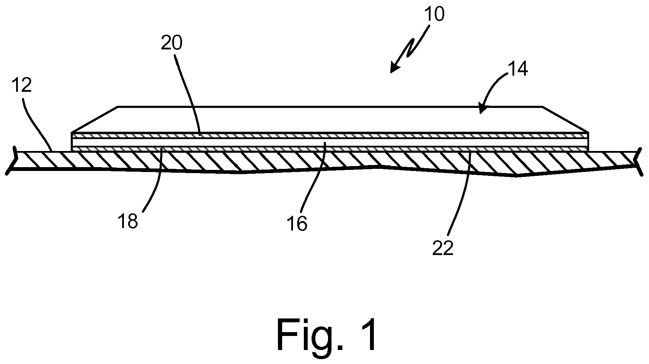

FIG. 1 depicts device 10 adhered to aircraft structure 12. Device 10 includes active element panel 14, thermally switchable PSA layer 16 for bonding active element panel 14 to aircraft structure 12, and optional primer layers 18, 20 disposed between PSA layer 16 and active element panel 14 and between PSA layer 16 and aircraft structure 12, respectively. PSA layer 16 defines a bonding surface 22 that bonds to aircraft structure 12 upon application of pressure. In some embodiments, an additional intermediate or carrier layer (not shown) can be disposed between active element panel 14 and PSA 16. The intermediate layer can be a different material than active element panel 14 and can serve as a flexible tie-in layer between active element panel 14 and PSA layer 16.

In some embodiments, active element panel 14 can be an anti-icer or a deicer, such as an elastomeric pneumatic deicer, elastomeric electrothermal deicer, and electromechanical deicer, as known in the art. In alternative embodiments active element panel 14 can be a heated floor panel for use in an aircraft cabin. Active element panel 14 can comprise a variety of materials depending on the application. Those skilled in the art will appreciate that active element panel 14 is not limited to the components disclosed herein and that PSA layer 16, while particularly suited to applications requiring high shear strength, is not limited to such applications, nor limited to use on an aircraft. In some embodiments, active element panel 14 can be flexible and capable of conforming to the shape of aircraft structure 12 with reasonable force and without damage to active element panel 14. Aircraft structure 12 can be constructed from a metal, such as aluminum, or a composite material as known in the art.

Active element panel 14 can be stored for use with PSA layer 16 installed. Bonding surface 22 of PSA layer 16 can be provided with a release layer (not shown), which can be removed immediately before adhering bonding surface 22 to aircraft structure 12. In a non-limiting example of device installation, aircraft structure 12 can be prepared for bonding by first scrubbing the surface clean with a cloth soaked in a solvent, such as toluene or MEK, and then wiping the surface with another solvent, such as ethyl alcohol. Primer layer 20 can be optionally utilized to provide an enhanced adhesive bond between PSA layer 16 and aircraft structure 12. A non-limiting example of a suitable primer is Tape Primer 94 available from 3M™. Primer 20 provides an interface between PSA layer 16 and aircraft structure 12 and can increase an adhesion surface area by filling in areas where the two surfaces would not otherwise come into contact due to surface abnormalities or discontinuities. Primer 20 may or may not be necessary depending on surface energy of aircraft structure 12 and viscoelastic properties and thickness of PSA layer 16. If primer 20 is used, it can be applied to aircraft structure 12 and allowed to dry before device installation. Device 10 can be bonded to aircraft structure 12 by first pressing a selected area of bonding surface 22 (PSA) against aircraft structure 12 and subsequently pressing bonding surface 22 against aircraft structure 12 with increasing distance from the selected area. In such manner, boding surface 22 is bonded to aircraft structure 12 merely by applying pressure. A rubber roller can be used to press device 10 against aircraft structure 12.

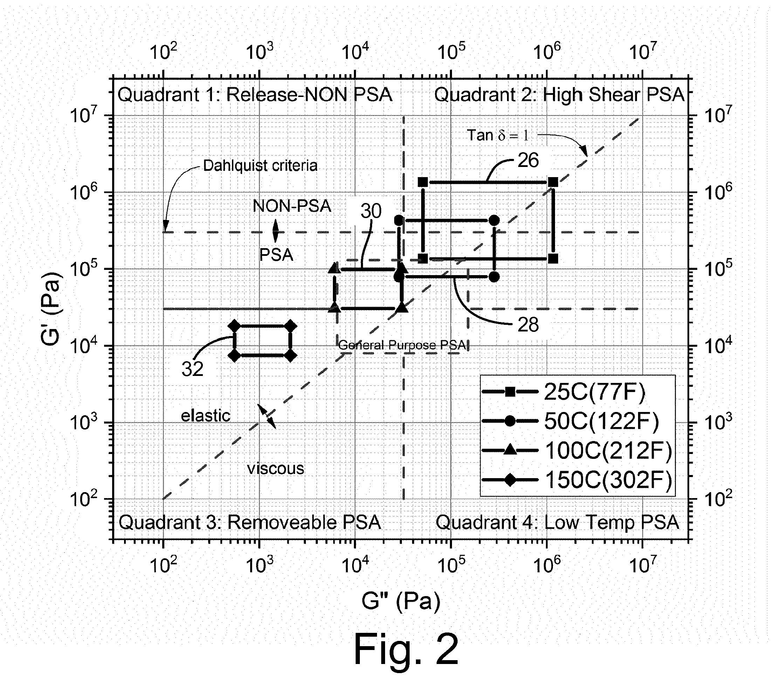

Thermally switchable PSA layer 16 can comprise an acrylic, rubber, or silicone PSA material combined with a solid solvent. The type of PSA material can be selected based on the application and/or material to which the PSA is bonding (e.g., acrylic PSAs generally exhibit better adhesion to metals than silicone PSAs). The addition of the solid solvent to the PSA material allows device 10 to be removed or repositioned with the application of heat. Heat can be provided by heat gun or other energy source capable of providing sufficient thermal energy to PSA layer 16. As referred to herein, "solid solvent" refers to a low molecular weight additive that is a viscosity-reducing solvent above the melting temperature of the solid solvent and a solid reinforcement below the melting temperature. The presence of the solid solvent thereby changes the rheology of PSA layer 16 with the addition of heat, dropping high and low strain rate storage and loss moduli to the extent that the high shear rheology of PSA layer 16 below the solid solvent melting temperature transitions to become a removable PSA above the melting temperature. Solubility of the solid solvent can be chosen relative to the PSA material (e.g., acrylic, rubber, or silicone) such that as PSA layer 16 cools from the solid solvent melting temperature, the solid solvent phase separates and becomes a reinforcing solid particle. In this state, the solid solvent increases a high strain rate storage and loss moduli and peel strength above that of the PSA material alone and without affecting low strain rate storage and loss moduli. The two states of PSA layer 16 can be illustrated using viscoelastic windows on a Chang plot, as shown in FIG. 2.

FIG. 2 is a Chang plot of one non-limiting example of thermally switchable PSA layer 16. The Chang plot is constructed in accordance with the method described in Chang, E.P., (J. of Adhesion v. 34 (1-4) (1991) pp. 189-200) to establish PSA viscoelastic windows 26, 28, 30, 32. The viscoelastic windows are constructed from values of dynamic storage or elastic modulus G' and dynamic loss modulus G", both measured in pascal (Pa), at an angular frequency of 0.01 radians per second (rad/s) and 100 rad/s. The storage modulus G' represents the elastic deformation of the material and is a measure of the stored energy. The loss modulus G" represents the viscous portion of the material and is a measure of the energy dissipated as heat. Low frequency testing characterizes bond formation, while high frequency testing characterizes debonding behavior and peel strength. Each viscoelastic window is produced by plotting values of (1) G' at 0.01 rad/s, G" at 0.01 rad/s (lower left corner), (2) G' at 100 rad/s, G" at 0.01 rad/s (upper left corner), (3) G' at 0.01 rad/s, G" at 100 rad/s (lower right corner), and (4) G' at 100 rad/s, G" at 100 rad/s (upper right corner) on a logarithmic scale vertical ordinate of G' and a logarithmic scale horizontal ordinate of G". The location of each viscoelastic window, and particularly the locations of the low frequency storage and loss moduli G' and G" (lower left corner of the viscoelastic window) and the high frequency storage and loss moduli G' and G" (upper right corner of the viscoelastic window), can determine the adhesion performance of PSA layer 16. As illustrated in FIG. 2, the position of the viscoelastic window within four defined quadrants can be used to identify non-PSA or release coatings (quadrant 1), high shear PSAs (quadrant 2), removable PSAs (quadrant 3), and quick stick and low temperature PSAs (quadrant 4), as described further herein.

Quadrant 1 is defined to be above a horizontal line at a G' value of 30,000 Pa and to the left of a vertical line at a G" value of 32,000 Pa. PSAs in quadrant 1 have a high storage modulus G' and a low loss modulus G". If the viscoelastic window is within quadrant 1, the material is rubbery, has a high storage modulus and does not dissipate energy. The overall behavior is that of a non-PSA or release film (i.e. the material will be unlikely to stick to a surface and will debond easily).

Quadrant 2 is defined to be above a horizontal line at a G' value of 30,000 Pa and to the right of a vertical line at a G" value of 32,000 Pa. PSAs in quadrant 2 have high storage and loss moduli G' and G". If the viscoelastic window is within quadrant 2, the material will have high cohesive strength due to the high storage modulus G' and high dissipation due to high loss modulus G". The overall behavior is that of a strong high shear PSA. As long as the low frequency G' is below the Dahlquist criterion of 3 x $10^5$ Pa at the temperature of application (usually about 25 °C), the PSA will be tacky and stick easily to the substrate surface.

Quadrant 3 is defined to be below a horizontal line at a G' value of 30,000 Pa and to the left of a vertical line at a G" value of 32,000 Pa. PSAs in Quadrant 2 have low storage and loss moduli G' and G". If the viscoelastic window is within quadrant 3, the material is a soft, highly viscous fluid. The material will stick well to a surface because the storage modulus G' is well below the Dahlquist criterion, and will not have much strength. Because the loss modulus G" is also low, materials with a viscoelastic window in quadrant 3 will not dissipate much energy when peeled. The resulting behavior is an easily removable PSA.

Quadrant 4 is defined to be below a horizontal line at a G' value of 30,000 Pa and to the right of a vertical line at a G" value of 32,000 Pa. PSAs in Quadrant 4 have a low storage modulus G' and a high loss modulus G". If the viscoelastic window is within quadrant 4, the material is a pressure sensitive adhesive capable of operating at very low temperatures. Because the loss modulus G" is high, materials with a viscoelastic window in quadrant 4 will have a high dissipation. Coupled with a low storage modulus G', the resulting behavior is a material that can stick with short contact time and at low temperatures.

A central area is defined as a box bounded by an upper horizontal line at a G' value of 130,000 Pa, a lower horizontal line at a G' value of 8,000 Pa and a pair of vertical lines at G" values of 6,500 Pa and 150,000 Pa. The central area is characterized by medium storage and loss moduli G' and G". If the viscoelastic window is within this central area, the material behaves as a middle of the road or general purpose PSA.

The Dahlquist criteria line is defined as a horizontal line at a G' value of 300,000 Pa as illustrated in FIG. 2. The Dahlquist criteria indicates the ability of a material to adhere to a surface with contact. For good tack, the lower left hand corner storage modulus G' of the viscoelastic window (i.e., G' at 0.01 rad/s, corresponding to a timescale used to apply the PSA to a surface) must fall below the Dahlquist criteria line. Tan $\delta$ is defined as the ratio of G" to G'. On the Chang plot, the diagonal tan $\delta$=1 line separates the region in which the storage modulus G' is greater than the loss modulus G" from the region in which the storage modulus G' is less than the loss modulus G". The portion of the viscoelastic window to the left of the tan $\delta$=1 line indicates elastic material characteristics, which provide better removability due to an increased likelihood of adhesive failure. The portion of the viscoelastic window to the right of the tan $\delta$=1 line indicates viscous material characteristics and materials prone to cohesive failure (e.g., can leave a residue upon removal).

Thermally switchable PSA layer 16 can be designed to exhibit properties of a high shear PSA at a temperature below the melting temperature of the solid solvent and exhibit properties of a removable PSA at and above the melting temperature of the solid solvent. PSA layer 16 can be further designed to have high shear strength over a service temperature range, such that PSA layer 16 will not fail due a change in temperature within the service temperature range during operation. For aircraft deicer applications, the service temperature can generally range from -40 °F to 160 °F (-40 °C to 71 °C). For deicing applications, PSA layer 16 has high frequency storage and loss moduli G' and G" located in quadrant 2 of the Chang plot within a range of G' values greater than 30,000 Pa and G" values greater than 32,000 Pa across the service temperature range. Preferably, the high frequency storage modulus G' will be above 130,000 Pa and the high frequency loss modulus G" will be above 32,000 Pa across the service temperature range. To prevent failure within this temperature range, the solid solvent selected for PSA layer 16 has a melting temperature above the service temperature range. Preferably, the melting temperature is significantly above the service temperature, but below a temperature at which PSA layer 16 could be degraded by excessive heat (approximately 175 °C for acrylic based PSAs) or at which a material forming the active element layer degrades or melts. For example, the melting temperature of the solid solvent can be above the service temperature of a polyurethane deicer, but below a melting temperature of the polyurethane. In the present example, the solid solvent melting temperature can be between approximately 100 °C and 160 °C.

For good tack upon installation of device 10, the lower left corner storage modulus G' (low frequency storage modulus G') is less than the Dahlquist criteria at 25 °C (temperature at which PSA layer 16 is applied to aircraft structure 12). For removability, PSA layer 16 is designed such that the viscoelastic window moves to a position low within quadrant 3 of the Chang plot when PSA layer 16 is exposed to heat at or above the melting temperature of the solid solvent. Preferably, the low frequency storage and loss moduli G' and G" (lower left hand corner of the viscosoelastic window), and the high frequency storage and loss moduli G' and G" (upper right corner of the viscoelastic window) are as low as possible within quadrant 3, but above the tan $\delta$=1 line (i.e., the ratio of G' to G" is greater than one), such that PSA layer 16 can be peeled off with low force with a reduced likelihood of leaving a residue on the substrate (e.g., aircraft structure 12). As the ratio of G' to G" drops below 1 (below the tan $\delta$=1 line), PSA layer 16 can experience cohesive failure. As temperature increases, adhesive softening, a reduction in shear strength, and a reduction in cohesive strength can be observed, as illustrated in FIG. 2 with the movement of the viscoelastic window from quadrant 2 (high shear PSA) toward quadrant 3 (removable PSA) as temperature is increased from 25 °C to 100 °C. This change in viscoelastic properties for high shear PSA materials can occur with or without the incorporation of a solid solvent. However, the incorporation of a solid solvent into a high shear PSA material can drop the viscoelastic window into quadrant 3 (removable PSA) at a lower temperature or at a temperature below which PSA layer 16 begins to degrade. As shown in FIG. 2, at 150 °C, viscoelastic window 32 is fully within quadrant 3, which is an improvement over the prior art PSA.

The solid solvent of PSA layer 16 has a solubility parameter close to the solubility parameter of the PSA material in PSA layer 16 to enable melting, but greater than the solubility parameter of the PSA material, such that the solid solvent is able to precipitate out of the PSA material and crystallize below the solid solvent melting temperature. The separation of the solid solvent into reinforcing solid particles within PSA layer 16 can increase the shear strength of PSA layer 16 as compared to PSA materials without the incorporation of a solid solvent. Preferably, the difference between the two solubility parameters is less than 6 $MPa^{1/2}$ and, preferably, with in a range of approximately 2 to 5 $MPa^{1/2}$. The solubility parameter of a typical acrylic PSA is between 18.1 $MPa^{1/2}$ and 25.1 $MPa^{1/2}$.

The following are non-limiting examples of thermally switchable PSA layer 16. Isothermal frequency sweeps of the PSA materials were performed using an ARES G2 RDA manufactured by TA Instruments LLC, 159 Lukens Drive, New Castle, DE 19720. Isotherm temperatures were 25 °C, 50 °C, 100 °C, and 150 °C. Storage modulus G' and loss modulus G" were measured from angular frequency of 0.01 rad/s to 100 rad/s taking five data points per decade of frequency. The geometry was a 25 mm diameter parallel plate.

FIG. 2 illustrates the thermally switchable PSA layer 16 of Example 2 below. All thermally switchable PSAs are compared in Table 1 with the commercially available PSA 3M # VHB™ 9473 BK PSA, commonly used in aircraft deicing applications. Thermally switchable PSAs comprise 3M # VHB™ 9473 BK PSA with the incorporation of varying solid solvent compounds and amounts of solid solvents. The solid solvents were selected from groups including carboxylic acids and L-Lactide. These compounds exhibit low reactivity, good solubility and melting temperature, and are commercially available. Those skilled in the art will appreciate that the solid solvent is not limited to those compounds disclosed herein, but any solid solvent meeting the previously defined criteria (i.e., solubility parameter above, but close to the solubility parameter of the PSA material, and melting temperature above a service temperature range). Other factors that can be included in the selection of a suitable solid solvent include, but are not limited to, low reactivity, low hazard, low cost, and commercial availability. While optimal solid solvents will not be reactive or cause hydrolytic or oxidative degradation of the PSA, some reactivity may be tolerated. Additionally, preferred solid solvents will not leach out of the PSA. Two solid solvents-adipic acid and suberic acid-were selected for testing. Adipic acid and suberic acid have solubility parameters of 29.6 $MPa^{1/2}$ and 27.4 $MPa^{1/2}$, respectively. 3M # VHB™ 9473 BK PSA has a solubility parameter of approximately 18.1 to 25.1 $MPa^{1/2}$. Adipic acid has a melting temperature of approximately 150-154 °C and suberic acid has a melting temperature of 141-144 °C which are above the service temperature range for an aircraft deicer.

The solid solvent powder was crushed to form a fine powder and combined with a 25 mm diameter x 2.5 mm thick disc of the 3M VHB™ PSA, according to the table below. The mixture was heated to 175 °C for 10 minutes in a convection oven. Upon heating above the solid solvent melt temperature, the solid solvent melted to become a liquid and was absorbed into the 3M VHB™ PSA. The sample was cooled to 25 °C. Weight percent of the solid solvent in the PSA was calculated according to Equation 1.

Equation 1:

$$Weight\ \% = 100 * \frac{mass\ solid\ solvent}{(mass\ of\ solid\ solvent + mass\ of\ PSA)}$$

Table 1: Solid solvent concentrations in VHB™ 9473 BK

| Example | Solid Solvent | Mass Solid Solvent (g) | Mass PSA (g) | Weight % Solid Solvent |
|---------|---------------|------------------------|--------------|------------------------|
| 1 | Adipic Acid | 0.067 | 1.059 | 5.95 |
| 2 | Adipic Acid | 0.148 | 1.013 | 12.75 |
| 3 | Adipic Acid | 0.280 | 1.042 | 21.1 |
| 4 | Suberic Acid | 0.065 | 1.035 | 5.91 |
| 5 | Suberic Acid | 0.143 | 1.204 | 10.6 |
| 6 | Suberic Acid | 0.281 | 1.033 | 21.3 |

Table 2: Example 1 (5.95 weight % adipic acid in 3M VHB™ 9473 BK PSA): Storage G' and loss moduli G" at low and high angular frequency

| Temp. (°C) | G'(0.01 s$^{-1}$) (Pa) | G"(0.01 s$^{-1}$) (Pa) | G' (100 s$^{-1}$) (Pa) | G"(100 s$^{-1}$) (Pa) | Chang Plot Region |
|------------|------------------------|------------------------|------------------------|-----------------------|-------------------|
| 25 | 47,324 | 12,406 | 585,370 | 631,638 | High Shear |
| 50 | 33,699 | 7,160 | 182,146 | 129,727 | High shear |
| 100 | 24,765 | 2,466 | 71,911 | 20,436 | Gen Purpose |
| 150 | 22,948 | 1,336 | 43,589 | 9,805 | Gen Purpose |

Table 3: Example 2 (12.75 weight % adipic acid in 3M VHB™ 9473 BK PSA): Storage G' and loss moduli G" at low and high angular frequency

| Temp. (°C) | G'(0.01 s$^{-1}$) (Pa) | G"(0.01 s$^{-1}$) (Pa) | G' (100 s$^{-1}$) (Pa) | G"(100 s$^{-1}$) (Pa) | Chang Plot region |
|------------|------------------------|------------------------|------------------------|-----------------------|-------------------|
| 25 | 135,581 | 50,732 | 1,351,340 | 1,169,980 | High Shear |
| 50 | 78,743 | 28,543 | 428,710 | 283,534 | High shear |
| 100 | 28,094 | 6,072 | 98,630 | 30,445 | Gen. Purpose |
| 150 | 7,482 | 551 | 17,904 | 2,114 | Removable |

Table 4: Example 3 (21.1 weight % adipic acid in 3M VHB™ 9473 BK PSA): Storage G' and loss moduli G" at low and high angular frequency

| Temp. (°C) | G'(0.01 s$^{-1}$) (Pa) | G"(0.01 s$^{-1}$) (Pa) | G' (100 s$^{-1}$) (Pa) | G"(100 s$^{-1}$) (Pa) | Chang Plot Region |
|------------|------------------------|------------------------|------------------------|-----------------------|-------------------|
| 25 | 138,459 | 41,802 | 1,292,800 | 1,198,200 | High Shear |
| 50 | 88,828 | 24,879 | 443,394 | 294,710 | High shear |
| 100 | 36,661 | 6,040 | 114,301 | 33,440 | Gen Purpose |
| 150 | 19,040 | 1,041 | 35,928 | 7,561 | Gen Purpose |

Table 5: Example 4 (5.91 weight % suberic acid in 3M VHB™ 9473 BK PSA): Storage G' and loss moduli G" at low and high angular frequency

| Temp. (°C) | G'(0.01 s⁻¹) (Pa) | G"(0.01 s⁻¹) (Pa) | G' (100 s⁻¹) (Pa) | G"(100 s⁻¹) (Pa) | Chang Plot Region |
|---|---|---|---|---|---|
| 25 | 78,839 | 22,413 | 868,563 | 815,270 | High Shear |
| 50 | 49,797 | 12,697 | 259,764 | 170,583 | High shear |
| 100 | 19,994 | 2,227 | 58,222 | 16,504 | Gen Purpose |
| 150 | 15,610 | 814 | 28,482 | 6,363 | Removable |

Table 6: Example 5 (10.6 weight % suberic acid in 3M VHB™ 9473 BK PSA): Storage G' and loss moduli G" at low and high angular frequency

| Temp. (°C) | G'(0.01 s⁻¹) (Pa) | G"(0.01 s⁻¹) (Pa) | G' (100 s⁻¹) (Pa) | G"(100 s⁻¹) (Pa) | Chang Plot Region |
|---|---|---|---|---|---|
| 25 | 134,061 | 37,484 | 1,378,460 | 1,300,450 | High shear |
| 50 | 86,166 | 21,340 | 428,081 | 279,093 | High shear |
| 100 | 32,542 | 4061 | 91,504 | 25,687 | Gen. Purpose |
| 150 | 19,587 | 882 | 34,733 | 7,373 | Gen. Purpose |

Table 7: Example 6 (21.3 weight % suberic acid in 3M VHB PSA) Storage G' and loss moduli G" at low and high angular frequency

| Temp. (°C) | G'(0.01 s⁻¹) (Pa) | G"(0.01 s⁻¹) (Pa) | G' (100 s⁻¹) (Pa) | G"(100 s⁻¹) (Pa) | Chang Plot Region |
|---|---|---|---|---|---|
| 25 | 305,781 | 106,591 | 2,923,300 | 2,462,790 | Non-PSA |
| 50 | 155,973 | 54,362 | 850,361 | 538,893 | High shear |
| 100 | 46,286 | 9,722 | 162,572 | 48,393 | High shear |
| 150 | 13,623 | 835 | 22,805 | 4,656 | Removable |

Experimental results presented in Tables 2-7 indicate that a solid solvent content above 6 wt% and below 21 wt% is preferable for the solid solvents tested. At 5.95 wt% adipic acid and 5.91 wt% suberic acid, a low reduction in viscosity was observed, but not sufficient enough to effectively switch the high shear PSA to a removable PSA above the solid solvent melting temperature. Above 21 wt%, the solid solvent increased stiffness to an extent that the material no longer performed as a PSA (with the low frequency storage and loss moduli G' and G" increased above the Dahlquist criteria line) at 25 °C (21.3 wt% suberic acid) or softened only enough to become a general purpose PSA above the melting point of the solid solvent (21.1 wt% adipic acid). The PSAs investigated performed effectively as a high sheer PSA at room temperature and removable PSA above the solid solvent melting point with solid solvent contents of 12.75 wt% adipic acid and 10.6 wt% suberic acid.

As disclosed, a solid solvent can be incorporated into a high shear PSA to produce a thermally switchable PSA, which exhibits properties of a high shear PSA below a melting temperature of the solid solvent and exhibits properties of a removable PSA above the melting temperature of the solid solvent. Heat can be applied to the thermally switchable PSA to allow for removal and repositioning during installation without destroying the PSA and without leaving a residue on an aircraft surface to which the PSA was bonded. The use of thermally switchable PSAs can facilitate the installation and removal of various aircraft components, which are adhesively bonded to a substrate, including aircraft components requiring high shear strength across a wide range of service temperatures (e.g., -40 °F to 160 °F (-40 °C to 71 °C)), such as anti-icers and deicers used to inhibit atmospheric ice accumulation on aircraft structures.

**Summation**

Any relative terms or terms of degree used herein, such as "substantially", "essentially", "generally", "approximately" and the like, should be interpreted in accordance with and subject to any applicable definitions or limits expressly stated herein. In all instances, any relative terms or terms of degree used herein should be interpreted to broadly encompass any relevant disclosed embodiments as well as such ranges or variations as would be understood by a person of ordinary skill in the art in view of the entirety of the present disclosure, such as to encompass ordinary manufacturing tolerance variations, incidental alignment variations, transient alignment or shape variations induced by thermal, rotational or vibrational operational conditions, and the like. Moreover, any relative terms or terms of degree used herein should be interpreted to encompass a range that expressly includes the designated quality, characteristic, parameter or value, without variation, as if no qualifying relative term or term of degree were utilized in the given disclosure or recitation.

## Discussion of Possible Embodiments

The following are non-exclusive descriptions of possible embodiments of the present invention.

A device comprises an active element panel and a pressure sensitive adhesive layer bonded to the active element panel and defining a bonding surface bondable to an aircraft structure. The pressure sensitive adhesive layer comprises a mixture of a pressure sensitive adhesive and a solid solvent.

The device of the preceding paragraph can optionally include, additionally and/or alternatively, any one or more of the following features, configurations, and/or additional components:

A further embodiment of the device of any of the preceding paragraphs, wherein the pressure sensitive adhesive exhibits properties of a high shear pressure sensitive adhesive at a temperature below a melting temperature of the solid solvent and exhibits properties of a removable pressure sensitive adhesive at a temperature above the melting temperature of the solid solvent.

A further embodiment of the device of any of the preceding paragraphs, wherein the pressure sensitive adhesive material is selected from a group consisting of an acrylic pressure sensitive adhesive, a rubber pressure sensitive adhesive, and a silicone pressure sensitive adhesive.

A further embodiment of the device of any of the preceding paragraphs, wherein the pressure sensitive adhesive has a first solubility parameter and the solid solute has a second solubility parameter, and wherein a difference between the first and second solubility parameters is less than 6 $MPa^{1/2}$.

A further embodiment of the device of any of the preceding paragraphs, wherein the second solubility parameter is greater than the first solubility parameter.

A further embodiment of the device of any of the preceding paragraphs, wherein the difference between the first and second solubility parameters is within a range of approximately 2 to 5 $MPa^{1/2}$.

A further embodiment of the device of any of the preceding paragraphs, wherein the solid solvent has a melting temperature above a service temperature of the device in operation and below a melting temperature of a material forming the active element panel.

A further embodiment of the device of any of the preceding paragraphs, wherein the pressure sensitive adhesive material is an acrylic pressure sensitive adhesive and the solid solvent is selected from a group consisting of carboxylic acids and L-lactide.

A further embodiment of the device of any of the preceding paragraphs, wherein the solid solvent precipitates out of the pressure sensitive adhesive and crystallizes at a temperature below the solid solvent melting temperature.

A further embodiment of the device of any of the preceding paragraphs, wherein the solid solvent increases a shear strength of the pressure sensitive adhesive at a temperature below the solid solvent melting temperature.

A further embodiment of the device of any of the preceding paragraphs, wherein the pressure sensitive adhesive layer has a high frequency storage modulus above 130,000 Pa and a high frequency loss modulus above 32,000 Pa across a temperature range of -40 to 71 degrees Celsius (-40 to 160 degrees Fahrenheit).

A further embodiment of the device of any of the preceding paragraphs, wherein the pressure sensitive adhesive layer has a viscoelastic window low frequency and high frequency storage and loss moduli below 30,000 Pa at a temperature above the melting temperature of the solid solvent.

A further embodiment of the device of any of the preceding paragraphs, wherein the pressure sensitive adhesive layer has low frequency storage and loss moduli below 30,000 Pa with the low frequency storage modulus being greater than the low frequency loss modulus at a temperature above the melting temperature of the solid solvent.

A method for removing an active element panel on an aircraft structure includes applying heat to a pressure sensitive adhesive layer of the active element panel and separating the pressure sensitive adhesive layer from the aircraft structure. The pressure sensitive adhesive layer includes a mixture of a pressure sensitive adhesive and a solid solvent.

The method of the preceding paragraph can optionally include, additionally and/or alternatively, any one or more of the following features, configurations, additional components, and/or steps:

A further embodiment of the method of any of the preceding paragraphs, wherein applying heat comprises raising a temperature of the pressure sensitive adhesive layer above a melting temperature of the solid solvent.

A further embodiment of the method of any of the preceding paragraphs, wherein the pressure sensitive adhesive layer comprises a pressure sensitive adhesive having a solubility parameter within approximately 2 to 5 MPa$^{1/2}$ of a solubility parameter of the solid solute.

A further embodiment of the method of any of the preceding paragraphs, wherein the pressure sensitive adhesive layer has a low frequency storage modulus below 30,000 Pa with the low frequency storage modulus being greater than the low frequency loss modulus at a temperature at a temperature above the solid solvent melting temperature.

A further embodiment of the method of any of the preceding paragraphs further including repositioning the active element panel on the aircraft structure by cooling the pressure sensitive adhesive layer to a temperature below the melting temperature of the solid solvent, and attaching the pressure sensitive adhesive layer to the aircraft structure.

A further embodiment of the method of any of the preceding paragraphs, wherein the cooled pressure sensitive adhesive layer has a high frequency storage modulus above 130,000 Pa and a high frequency loss modulus above 32,000 Pa.

A further embodiment of the method of any of the preceding paragraphs, wherein the pressure sensitive adhesive layer has a high frequency storage modulus above 130,000 Pa and a high frequency loss modulus above 32,000 Pa across a temperature range of -40 to 71 degrees Celsius (-40 to 160 degrees Fahrenheit).

While the invention has been described with reference to an exemplary embodiment(s), it will be understood by those skilled in the art that various changes may be made and equivalents may be substituted for elements thereof without departing from the scope of the invention as defined by the claims. In addition, many modifications may be made to adapt a particular situation or material to the teachings of the invention without departing from the scope of the invention as defined by the claims. Therefore, it is intended that the invention not be limited to the particular embodiment(s) disclosed, but that the invention will include all embodiments falling within the scope of the appended claims.

## Claims

1. A device comprising:

   an active element panel (14); and
   a pressure sensitive adhesive layer (16) bonded to the active element panel and defining a bonding surface (22) bondable to an aircraft structure, wherein the pressure sensitive adhesive layer comprises a mixture of a pressure sensitive adhesive and a solid solvent.

2. The device of claim 1, wherein the pressure sensitive adhesive exhibits properties of a high shear pressure sensitive adhesive at a temperature below a melting temperature of the solid solvent and exhibits properties of a removable pressure sensitive adhesive at a temperature above the melting temperature of the solid solvent.

3. The device of claim 2, wherein the pressure sensitive adhesive is selected from a group consisting of an acrylic pressure sensitive adhesive, a rubber pressure sensitive adhesive, and a silicone pressure sensitive adhesive.

4. The device of claim 3, wherein the pressure sensitive adhesive has a first solubility parameter and the solid solute has a second solubility parameter, and wherein a difference between the first and second solubility parameters is less than 6 MPa$^{1/2}$, and preferably wherein the second solubility parameter is greater than the first solubility parameter, and preferably wherein the difference between the first and second solubility parameters is within a range of approximately 2 to 5 MPa$^{1/2}$.

5. The device of claim 3, wherein the solid solvent has a melting temperature above a service temperature of the device in operation and below a melting temperature of a material forming the active element panel.

6. The device of claim 5, wherein the pressure sensitive adhesive material is an acrylic pressure sensitive adhesive and the solid solvent is selected from a group consisting of carboxylic acids and L-Lactide.

7. The device of claim 5, wherein the solid solvent precipitates out of the pressure sensitive adhesive and crystallizes at a temperature below the solid solvent melting temperature, and preferably wherein the solid solvent increases a shear strength of the pressure sensitive adhesive at a temperature below the solid solvent melting temperature.

8. The device of claim 5, 6 or 7, wherein the pressure sensitive adhesive layer has a high frequency storage modulus above 130,000 Pa and a high frequency loss modulus above 32,000 Pa across a temperature range of -40 to 71 degrees Celsius (-40 to 160 degrees Fahrenheit).

9. The device of claim 5, 6 or 7, wherein the pressure sensitive adhesive layer has low frequency storage and loss moduli below 30,000 Pa with the low frequency storage modulus being greater than the low frequency loss modulus at a temperature above the melting temperature of the solid solvent.

10. The device of claim 5, 6 or 7, wherein the pressure sensitive adhesive layer has a viscoelastic window low frequency and high frequency storage and loss moduli below 30,000 Pa at a temperature above the melting temperature of the solid solvent.

11. A method for removing an active element panel from an aircraft structure, the method comprising the steps of:

applying heat to a pressure sensitive adhesive layer of the active element panel, the pressure sensitive adhesive layer comprising a mixture of a pressure sensitive adhesive and a solid solvent; and
separating the pressure sensitive adhesive layer from the aircraft structure.

12. The method of claim 11, wherein applying heat comprises raising a temperature of the pressure sensitive adhesive layer above a melting temperature of the solid solvent, and preferably wherein the pressure sensitive adhesive layer comprises a pressure sensitive adhesive having a solubility parameter within approximately 2 to 5 MPa$^{1/2}$ of a solubility parameter of the solid solute.

13. The method of claim 12, wherein the pressure sensitive adhesive layer has a low frequency storage modulus below 30,000 Pa with the low frequency storage modulus being greater than the low frequency loss modulus at a temperature above the solid solvent melting temperature, and preferably further comprising repositioning the active element panel on the aircraft structure by:

cooling the pressure sensitive adhesive layer to a temperature below the melting temperature of the solid solvent; and
attaching the pressure sensitive adhesive layer to the aircraft structure.

14. The method of claim 13, wherein the cooled pressure sensitive adhesive layer has a high frequency storage modulus above 130,000 Pa and a high frequency loss modulus above 32,000 Pa, and preferably wherein the pressure sensitive adhesive layer has a high frequency storage modulus above 130,000 Pa and a high frequency loss modulus above 32,000 Pa across a temperature range of -40 to 71 degrees Celsius (-40 to 160 degrees Fahrenheit).

Fig. 1

Fig. 2

Europäisches Patentamt

European Patent Office

Office européen des brevets

# EUROPEAN SEARCH REPORT

Application Number

EP 19 20 2775

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | US 6 352 601 B1 (RAY ROBERT W [US]) 5 March 2002 (2002-03-05) * abstract * * column 6, line 27 - line 45; claims 1,2 * ----- | 1-14 | INV. C09J5/06 C09J7/38 B64D15/00 |
| Y | WO 2018/156689 A1 (NIKE INNOVATE CV [US]; NIKE INC [US]) 30 August 2018 (2018-08-30) * abstract * * paragraph [0063]; claims 1-5 * ----- | 1-14 | |

TECHNICAL FIELDS SEARCHED (IPC)

C09J
C08K
B64F
B64D

The present search report has been drawn up for all claims

| Place of search | Date of completion of the search | Examiner |
|---|---|---|
| Munich | 24 February 2020 | Meier, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 19 20 2775

This annex lists the patent family members relating to the patent documents cited in the above-mentioned European search report.
The members are as contained in the European Patent Office EDP file on
The European Patent Office is in no way liable for these particulars which are merely given for the purpose of information.

24-02-2020

| Patent document cited in search report | | Publication date | Patent family member(s) | | Publication date |
|---|---|---|---|---|---|
| US 6352601 | B1 | 05-03-2002 | DE | 69516995 D1 | 21-06-2000 |
| | | | DE | 69516995 T2 | 28-12-2000 |
| | | | EP | 0720946 A1 | 10-07-1996 |
| | | | US | 6352601 B1 | 05-03-2002 |
| WO 2018156689 | A1 | 30-08-2018 | CN | 110337478 A | 15-10-2019 |
| | | | EP | 3568447 A1 | 20-11-2019 |
| | | | US | 2018235316 A1 | 23-08-2018 |
| | | | WO | 2018156689 A1 | 30-08-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6250587 B
- US 6352601 B

**Non-patent literature cited in the description**

- **CHANG, E.P.** *J. of Adhesion,* 1991, vol. 34 (1-4), 189-200